# EUROPEAN PATENT SPECIFICATION

(11) **EP 1 161 106 B1**
(45) Date of publication and mention of the grant of the patent: **19.11.2008**
(21) Application number: 01113323.8
(22) Date of filing: 31.05.2001
(51) Int. Cl.: H04Q 7/22

(54) **Interworking function for cellular wireless systems**
Interworking-Funktion für zellulare drahtlose Systeme
Fonction d'adaptateur pour systèmes cellulaires sans fils

(30) Priority: 31.05.2000 US 583291
(43) Date of publication of application: 05.12.2001
(73) Proprietor: NEC CORPORATION, Tokyo (JP)
(72) Inventor: Kuehnel, Thomas, c/o NEC U.S.A., Inc., Princeton, New Jersey 08540 (US); Rajagopalan, Bala, c/o NEC U.S.A., Inc., Princeton, New Jersey 08540 (US)
(74) Representative: Betten & Resch

(56) References cited:
- WO-A-00/08803
- WO-A-00/19742
- BRASCHE G ET AL: "CONCEPTS, SERVICES, AND PROTOCOLS OF THE NEW GSM PHASE 2+ GEBERAKL PACKET RADIO SERVICE" IEEE COMMUNICATIONS MAGAZINE, IEEE SERVICE CENTER. PISCATAWAY, N.J, US, vol. 35, no. 8, 1 August 1997 (1997-08-01), pages 94-104, XP000704443 ISSN: 0163-6804
- CHAKRABORTY S S: "Mobile multimedia: in context to ATM transport and GSM/GPRS mobile access networks" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13 November 1995 (1995-11-13), pages 1937-1941, XP010164594 ISBN: 0-7803-2509-5

## Description

This disclosure teaches how to provide an interworking function for cellular wireless systems. Specifically, techniques for attaching a conventional cellular basestation system (Cellular BSS) to a mobility enhanced packet data network are provided.

### Glossary

To help in understanding the present disclosure, a glossary of terms is provided hereunder.
- API: Application Programming Interface
- ATM: Asynchronous Transfer Mode
- BSC: Basestation Controller
- BSS: Basestation Subsystem
- BSSMAP: Basestation Subsystem Mobile Application Part
- BTS: Basestation Transceiver System
- CCB: Call Control Block
- CIC: Circuit Identity Code
- DTAP: Direct Transfer Application Part
- EIR: Equipment Identification Register
- GSM: Global System for Mobile communication
- GSMP: Generic Switch management protocol
- HA: Home Address
- IMSI: International Mobile Subscriber ID
- IWF: Interworking Function
- MATM: Mobility enhanced ATM
- MM: Mobility Management
- MSC: Mobile Switching Center
- MSISDN: Mobile Subscriber ISDN
- MTP: Message Transfer Protocol 2
- MUNI: Mobility enhanced User Network Interface
- RR: Radio Resource management
- SS7: Signalling System 7
- SSM: System Startup Module
- SCCP: Service Connection Control Part
- TMSI: Temporary Mobile Subscriber ID
- UNI: User Network Interface

Second generation cellular wireless networks that follow the GSM, IS-95 and IS-136 standards have the same or similar hierarchical architecture comprising of a set of functional entities. Further details of GSM can be found in M. Mouly M.-B. Pautet: "The GSM System for Mobile Communications" Cell & Sys 1992, ISBN: 2-9507190-0. Further details of IS-95 can be found in *Electronic Industries Association*/ *Telecommunications Industry Association,* Mobile station-base station compatibility standard for dual-mode wideband spread spectrum cellular system, TIA/ETA/TS-95-A. May, 1995. Further details of IS-136 can be found in *Electronic Industries Association*/*Telecommunications Industry Association,* TDMA Cellular PCS (ANSI/TIA/EIA-136-99) TIA/EIA 136. Major components of a cellular wireless network are: Mobile Switching Center (MSC), Basestation Controller (BSC) and Basestation Transceiver System (BTS). In the present disclosure, Basestation Subsystem (BSS) is referred to as the combination of BSC and BTS.

Components are arranged in correspondence with the centralized control functions being executed by the MSC. The MSC forms the highest level of the hierarchy. Further, the MSC acts as the signaling endpoint for all mobile terminals. Additionally, Voice bearer connections originated and/or terminated in a mobile device follow the signaling connection. Such connections are passed through the entire hierarchy up to the MSC. Likewise, even the connections between two mobile devices that are associated with one BTS or BSC are passed through the MSC. In addition, the MSC forms the Gateway to other networks such as the Public Switched Telephone Network (PSTN).

In the level lower to the MSC, the BSC controls a given radio location area. Such a radio location area comprises multiple radio cells. The BSCs perform coordination and radio control functions for the radio location area.

The lowest level of the hierarchy is the radio cell which is served by a BTS. The BTS is simple and contains the radio frequency (RF) transmitter and receiver.

It is to be noted that the functionality and the associated costs are highest at the highest level which is the MSC. In a typical scenario, a single MSC or a few (< 10) MSCs are deployed in a nationwide or regional cellular network. The number of devices increases in the lower hierarchy levels. For example, there are multiple BSCs attached to an MSC and multiple BTSs are controlled by a BSC.

Cellular network architecture evolved from pre-existing circuit switched telephone network (PSTN). MSCs that act as central components of the network are derived from central office exchange switches and are created by modified telephone switches. The cellular network infrastructure is built by using preexisting wire-line transport infrastructure for interconnecting the various components within the hierarchy. Leased lines using PDH (Plesiochronous Digital Hierarchy) and SDH (Synchronous Digital Hierarchy) framing and multiplexing are set up between various devices within the hierarchy to ensure the properties required to perform connection and mobility control in a timely manner. However, the leased line infrastructure is an expensive component in the operation of the cellular network.

To offer data services via such cellular networks, a second packet data network has to be deployed in parallel to the circuit switched network. A GPRS (General Packet Radio Service) network is a typical example of this secondary data network. For further details on GPRS, See, European Telecommunications Standards Institute (ETSI): General Packet Radio Service (GPRS) Service Description; Stage 2 GSM 03.60 V5.3.O 1998-03. But, the setup, operation and maintenance of two separate networks imposes additional investment and operational costs on the network operator.

Also, with the evolving packet data networks (ATM, IP, Frame Relay, X.25) and data services to be offered via the cellular system, the advantages that would result from the use of packet data network infrastructure for the unified transport of data and voice alike has not yet been realized. However, this approach necessitates the interworking of BSC and BTS with the data network. Such an interworking would involve physical interworking of devices as well as interworking of control and user plane protocols. Further, since packet data networks provide instant data transfer without timely connection setup procedures, the bandwidth can be used on demand resulting in significant gains due to multiplexing.

In addition, the signaling endpoints for mobile device connection control is not presently decentralized such as would be the case if, for example, the control paired with the interworking function. Thus in conventional systems connection routing is not optimized. For example, connections from one mobile device to another mobile station (MS) are always routed to a central point (MSC), which leads to unnecessarily wasteful use of resources. The same applies to the Gateway function to other networks, which are presently not distributed across multiple nodes. As a result the total load over the entire network and the total provisioned capacity is high and need to be lowered.

The coverage area of conventional cellular networks comprises multiple radio cells which can be overlapping and non-overlapping. Each radio cell is controlled by a BTS. The BTS contains the radio system and is typically co-located with an antenna site. A cellular mobile station (MS) establishes a radio link with the BTS that covers the geographical area in which the MS is currently located.

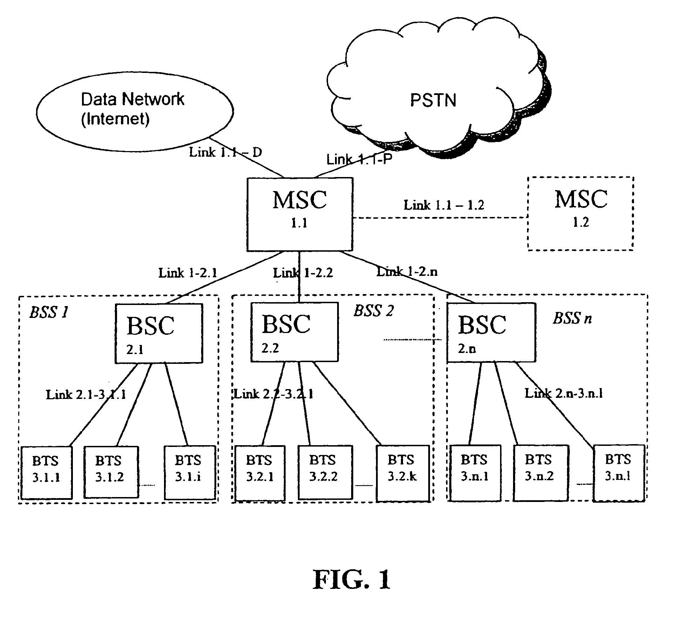

To achieve wide coverage with small transmission power and to re-use frequency spectrum many (up to thousands in a nationwide network) radio cells, each controlled by a separate BTS, form the cellular network. Therefore, it is advantageous to keep the BTS simple and cheap. The functionality is reduced to basic radio functions like transmitting and receiving. The processing and control functions are executed in a BSC. The BSC manages multiple (up to thousands) BTS. The BSS contains a BSC and the BTSs, which are connected to this BSC. Multiple BSCs interface with the MSC. The MSC has multiple functions including connection control for the mobile devices, gateway to other networks (PSTN, Data Network), overall resource management and in conjunction with associated databases the subscriber management and mobility control. The databases are: Home Location Register and Visitor Location Register. One MSC can typically handle hundred of thousands of subscribers. Multiple MSCs are deployed in large networks. FIG.1 illustrates the architecture of a conventional cellular network.

As shown in FIG.1 the MSC (1.1) is connected to multiple BSCs (2.1 ...2.n) via links 1-2.1...1-2.n. Each BSC (2.1...2.n) controls a set of BTS (3.1.1, 3.1.2, ...3.1.i, 3.2.1...3.2.k, 3.n.1...3.n.l) via the links 2.1-3.1.1...2.n-3.n.l. The BSS1 comprises BSC 2.1 and BTS 3.1.1 ...BTS 3.1.i, B552 comprises BSC2.2 and BTS 3.2.1...3.2.k, and BSS n comprises BSC 2.n and the BTS 3.n.1...3.n.l. In addition the MSC (1.1) has connections to another MSC (MSC 1.2) and the public phone network (PSTN) as well as a Data network via dedicated links (1.1-1.2, 1.1-P, 1.1-D). The links interconnecting the BTSs with BSCs (links 2.1-3.11...2.n-3.n.l) as well as the links interconnecting the BSCs with an MSC (1-2.1...1-2.n) are dedicated links, which are statically set-up. In practice those dedicated links are made of fixed leased lines or microwave links.

In WO-A-00/19742, a method and apparatus for providing overlay to support post-second generation cellular services is disclosed. An overlay system is provided over an existing switching infrastructure in a wireless communications system for enabling support for high-speed services.

Document "Concepts, Services, and Protocols of the New GSM Phase 2+ General Packet Radio Service" by Brasche G. et al., IEEE Communications Magazine, vol. 35, no.8 August 1997 dicloses concepts, services, and protocols of the new GSM phase 2+ general packet radio service, wherein possible applications and elementary concepts and service characteristics of GPRS will be explained in detail.

In WO-A-00/08803, a plug and play wireless architecture supporting packet data and IP voice/multimedia services is disclosed. A telecommunications network is provided supporting wireless access to one or more public packet data networks.

Document "Mobile multimedia: In Context to ATM Transport and GSM/GPRS Mobile Access Networks" by Chaleraborty S.S., IEEE Conference Singapore, 13.11.1995, describes a general mobile access network to an ATM backbone, catering to mobile multimedia. In particular, the GSM system as an access network is described.

The advantages in using a packet based data network infrastructure and distributed connection control for interconnecting the BSS are numerous, esp. in terms of efficiency and costs for setting up and operating a wireless cellular network.

A mechanism that allows the attachment of a conventional Cellular BSS (Basestation Subsystem) to a mobility enhanced packet data network is taught in the present disclosure. An element in the system is an Interworking Function (IWF) that allows interworking of a Wireless Cellular BSS with packet data network. It is assumed that the packet data network supports mobility, i.e. registration, i.e.-registration, authentication, and handover as described in, see C. Perkins: "Mobile IP Design Principles and Practices", Addison Wesley 1997, ISBN 0-201-63469-4 and B. Rajagopalan, D. Reininger: "Wireless ATM: QoS and Mobility Management" in Mobile Communications Handbook second edition, CRC Press IEEE Press 1999, ISBN 0-8493-8597-0. The IWF is typically realized in a computing device having interfaces with the packet data network and the BSS. The control part of the IWF can be separately realized on any computing device that is attached to the packet data network. The IWF translates user plane protocols and control plane protocols used on the cellular side (BSS) into protocols specific to the mobility enhanced network. An address server that contains subscriber data such as identification, subscriber profile and billing information also contains call routing information to determine the IWF the subscriber is currently associated with. The present technique makes it possible to implement new high-speed, Internet-oriented mobile networks while preserving backward compatibility to existing air interfaces and subscriber equipment.

The present disclosure teaches a solution for interconnecting traditional BSSs to a packet data network. The functionality of the MSC is distributed to multiple network elements, preferably the interworking nodes that interconnect conventional BSS to a packet data network. Those network elements can be realized by using cheap "off the shelf" hardware since the requirements in terms of throughput and reliability are lower compared to MSCs where all traffic is traversing and represents a singular point of failure.

The packet data network should support mobility. The present solution is shown for ATM but can be easily extended to other data network technologies such as IP.

Since 3rd generation digital systems, with a large proportion of higher-speed data traffic, will evolve from 2nd generation system the advantages of using a packet data network infrastructure apply to future cellular networks as well, especially if heterogeneous air interfaces are deployed to set up hot spots offering high bandwidth in a small geographical coverage area.

To meet the objectives of the invention there is provided a method for terminating a call in a mobile station in a cellular networking system as defined in claim 1. The cellular networking system according to an aspect comprises a mobility enhanced packet data network and at least one basestation subsystem (BSS), said BSS communicating with said mobility enhanced packet data network, said BSS further comprising a base station controller (BSC); said mobility enhanced packet data network having at least one bridge to an external network.

The above objectives and advantages of the present invention will become more apparent by describing in detail preferred embodiments thereof with reference to the attached drawings in which:
- FIG.1: shows an Architecture for a Traditional Cellular System.
- FIG.2: shows a Wireless Network embodying the present invention.
- FIG.3: depicts an embodiment of the IWF with the major functionalities and interfaces.
- FIG.4: shows an example of a location update scenario.
- FIG.5: shows an example of a mobile terminated call scenario.
- FIG.6: shows an example of a mobile originated call scenario.
- FIG.7: shows an example of a handover procedure.
- FIG.8: shows a functional architecture and interfaces for a preferred embodiment of the disclosed technique.
- FIG.9: shows a reference model for the preferred embodiment.
- FIG.10: shows an embodiment of the protocol stacks in the BSA.
- FIG.11: shows an embodiment of the BS IWF software architecture.
- FIG.12: shows an embodiment of the BS IWF non-roaming location update without registration.
- FIG.13: shows an embodiment of the BS IWF non-roaming location update with registration.
- FIG.14: shows an example of a mobile originated BS IWF call setup.
- FIG.15: shows an example of a mobile terminated BS IWF call setup.
- FIG.16: shows an example of BS IWF handover procedure at the old BS IWF.
- FIG.17: shows an example of BS IWF handoff procedure at the new BS IWF.
- FIG.18: shows an example of a mobile originated BS IWF call release.
- FIG.19: shows an example of a network initiated BS IWF call release.
- FIG.20: shows an embodiment of the address server software architecture.

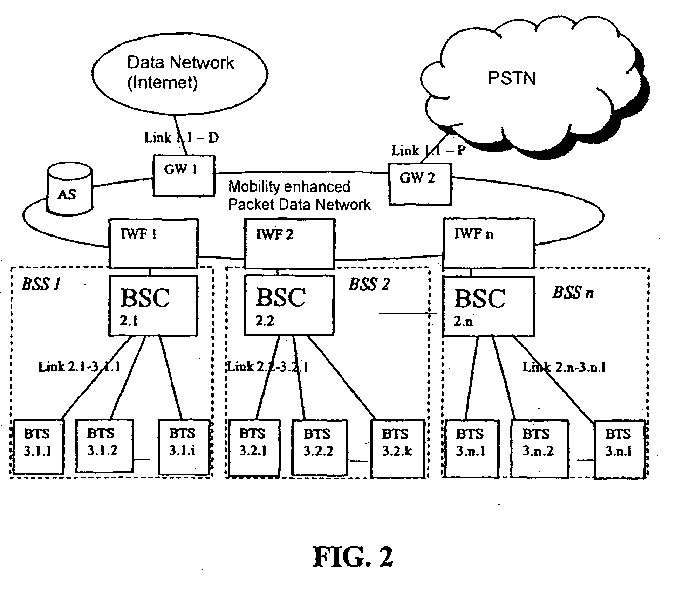

The network architecture of a cellular network that interconnects BSS to a packet data network according to the preferred embodiment is shown in FIG.2. According to the preferred embodiment the BSCs 2.1...2.n are connected to the packet data network via Interworking Functions IWF 1...IWF n. The IWFs are preferably co-located with the associated BSCs that provide the interconnection with the packet data network. IWFs may also be integrated into the associated BSCs. An address server (AS) that is preferably attached to the packet data network stores data such as address, user profile, routing information, billing data. The address server may be implemented as a distributed system. The address server may also be co-located with the IWF or integrated with the IWF. The bridges to external networks such as the PSTN are formed by Gateways GW 1, GW 2 that perform the protocol mapping between the protocols used in the packet data network and the external network, e.g. PSTN. Instead of or in addition to the PSTN any other data network maybe used. The Gateways can be attached at any point in the packet data network. The Gateways may also be co-located with the IWF or integrated with the IWF.

In the following sections, the components according to the preferred embodiment are listed and explained.

### A. IWF (Interworking Function)

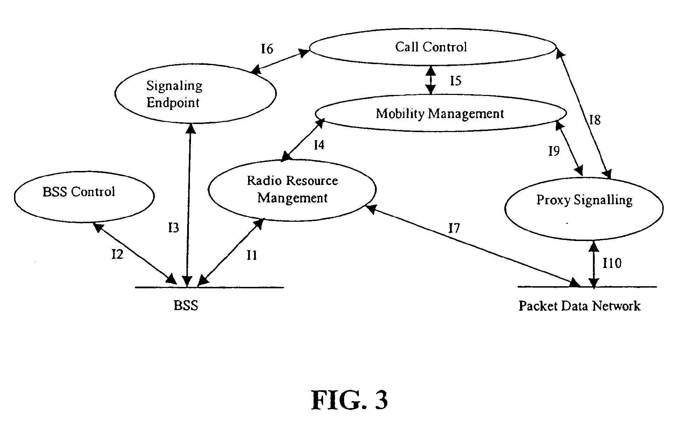

The IWF contains the functional entities to control the BSS, to act as a signaling endpoint for MS and to perform the proxy signaling for the packet data network. The IWF performs call control, mobility management, resource management and user plane adaptation between the protocols used at the cellular side and the protocols used in the packet data network. FIG.3 illustrates the major functional entities and their interfaces.

Major functions of the IWF are described below:

### 1. Signalling endpoint for the MSs

Signaling protocols for connection control (Setup, release) are executed between the MS and the IWF. In case of GSM, signaling protocols are based on the SS7 protocol suite. For details on the SS7 protocol, *See*, European Telecommunications Standards Institute (ETSI): Mobile Radio Interface Layer 3 Specification GSM 04.08 Phase 2. April 1997.

### 2. BSS control

The BSS control comprises the protocols and the logic to control the BSS. In case of GSM, protocols are based on the SS7 protocol suite. For details on the SS7 protocol, *See,* European Telecommunications Standards Institute (ETSI): Signaling Transport Mechanism Specification for the BSS/MSC Interface ETSI GSM 08.06 Phase 2, July 1995.

### 3. Call Control (CC)

The call control contains the call state machines and associated logic for the active connections between the MS and the network. The call control also forms the bridging layer between the signaling endpoint for the MS and the proxy signaling entity. In case of GSM, CC implements the procedures specified in, European Telecommunications Standards Institute (ETSI): Mobile Radio Interface Layer 3 Specification GSM 04.08 Phase 2. April 1997.

### 4. Mobility Management (MM)

The mobility management contains the logic for processing the location information of mobiles, i.e. a mobile enters or leaves a location area controlled by the BSC. It invokes the procedures to the BSS and the packet data network side. In case of GSM, MM implements the procedures specified in European Telecommunications Standards Institute (ETSI): Mobile Radio Interface Layer 3 Specification GSM 04.08 Phase 2. April 1997.

### 5. Radio Resource Mana2ement (RRM)

RRM performs resource management and handoff control. It maintains a data record for each MS currently associated with the IWF. In case of GSM, this module implements the network side of GSM RIL3 RR protocols. For further details about these protocols *See* European Telecommunications Standards Institute (ETSI): Mobile Services Switching Center-Basestation System (MCS-BSS) interface layer 3 specification ETSI SM 08.08 Phase 2, September 1996.

### 6. User plane adaptation

This entity performs the adaptation of the media stream (e.g. voice) between the packet data network and the BSS side. This can comprise compression/decompression and transcoding.

### 7. Proxy signaling

The proxy signaling terminates the call related and mobility related signaling protocols, which are used for communication within the packet data network. One logical instance is created for each associated MS. Each logical instance emulates a mobile node that is native to the mobility enhanced packet data network. This proxy signaling interfaces with the MM and CC modules. Each instance is addressed via terminal identifier that is carried as a parameter during connection setup.

### B. Address Server (AS)

The Address Server maps addresses used for identification and routing used in the BSS into addresses and identifications used in the packet data network. In addition, the address server can contain the subscriber records with service profile, authentication information, billing etc.

In the case of the GSM cellular standard the address server contains the IMSI (International Mobile Subscriber Identifier), the MSISDN (Mobile Station ISDN number), the packet data network routing information, e.g. the IP address of the IWF at the present location of the mobile station as well as the associated home address in the packet data network. It may also contain a Temporary Mobile Subscriber Identifier (TMSI) as defined in GSM.

In addition, the authentication triplet as well as the billing and subscriber information can be maintained in the address server.

The address server is a database, which can be distributed across multiple computers. Special mechanisms should ensure integrity of data within the distributed database. The address server is attached to the packet based data network.

### C. Gateway function

The gateway function is used as a bridge to another network. It maps user plane and control plane protocols used in mobility enhanced packet data network and the target or next transit network. The gateway function can be implemented in a single or multiple computing devices, which are interconnected to the destination network. The gateway function may be also co-located within the IWF and thus reducing the total network load.

### D. EIR (Equipment Identification register)

The equipment identification register stores the Ids of Mobile devices. The information is used to blacklist a specific MS or groups of MS. The BR can be attached to any part of the packet data network. Upon association the EIR is queried if the equipment is blacklisted. The function of an EIR is similar to that described in M. Mouly M.-B. Pautet: "The GSM System for Mobile Communications" Cell & Sys 1992, ISBN: 2-9507190-0. The EIR is not shown in FIG.2.

### E. Procedures

Some of the procedures for the operation of the preferred embodiment are described hereunder.

### 1. Location update

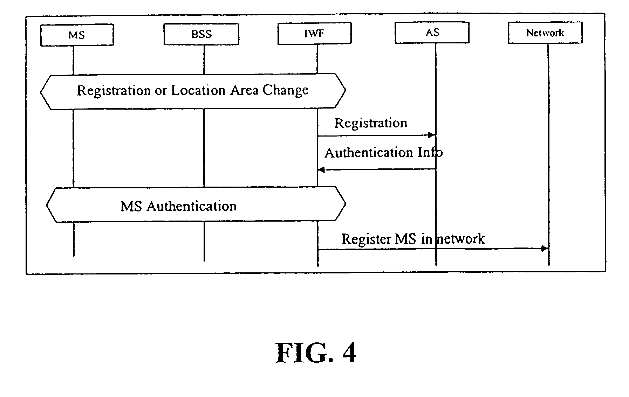

Upon registration of an MS or the change of the location area, the IWF invokes a location update procedure of the address server to obtain the information that is stored for the particular MS. The subscriber identification (IMSI or/and TMSI) that is passed as an argument acts as a key into the address server database. The IWF may trigger authentication of the MS using that information. If authentication is successful, the mobile is marked as active in the mobility enhanced packet data network. The IWF address that the MS is associated with is registered as a routing address within the mobility enhanced network. The mechanism within the mobility enhanced packet data network to set the routing address is similar to the ones found in C. Perkins: "Mobile IP Design Principles and Practices", Addison Wesley 1997, ISBN 0-201-63469-4 and B. Rajagopalan, D. Reininger: "Wireless ATM: QoS and Mobility Management" in Mobile Communications Handbook second edition, CRC Press IEEE Press 1999, ISBN 0-8493-8597-0. FIG.4 illustrates an embodiment of the location update scenario.

### 2. Connection Setup

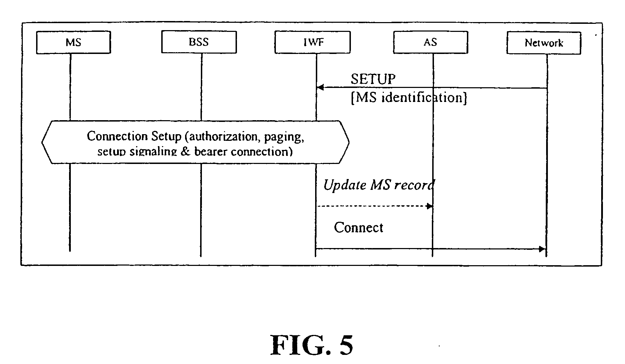

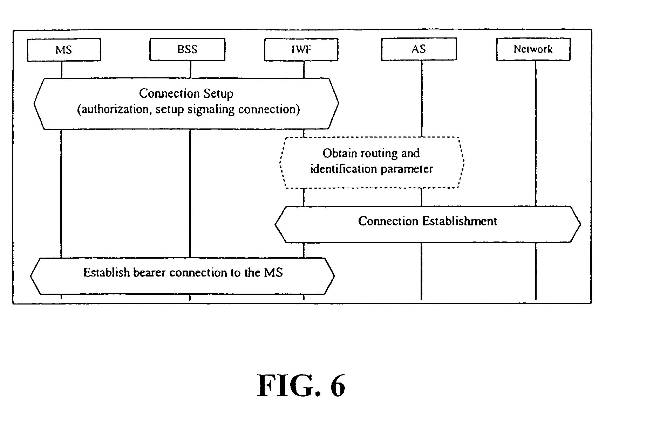

At least two scenarios can be distinguished in the connection setup. The call could be originating in the mobile (mobile originating) or the call could be terminating in the mobile (mobile terminating).
(1) Mobile terminating call:
   For the purposes of the described embodiment it is assumed that the call is properly routed within the packet data network to the IWF the MS is currently associated with, i.e. the identification of the mobile terminal is translated into proper routing information. Some of the ways of performing such a translation can be based on mechanisms described in, *see* C. Perkins: "Mobile IP Design Principles and Practices", Addison Wesley 1997, ISBN 0-201-63469-4 and B. Rajagopalan, D. Reininger: "Wireless ATM: QoS and Mobility Management" in Mobile Communications Handbook second edition, CRC Press IEEE Press 1999, ISBN 0-8493-8597-0. The routing information used in the cellular system such as the MSISDN number of the MS in GSM is conveyed as part of the call setup message. This MSISDN number is used to identify and select the proxy signaling instance that is associated with the MS. If ATM with signaling is used for the packet data network, the cellular routing information (e.g. MSISDN number) may be conveyed in the SETUP message sub-address information element (IE). The IWF invokes the necessary actions, like service authorization, paging, setting up signaling and bearer connection etc. If the call is accepted, the confirmation (connect) is returned via the packet data network to the calling party. In case the call is rejected, or for any other reason the call can not be completed, an error message is sent to the caller. Upon call release, the bearer connection is cleared and the previously reserved resources are freed. The subscriber information contained in the address server may be updated, e.g. for billing purposes following connection setup and/or release. FIG.5 illustrates the sequence of events for an embodiment of a mobile terminated connection setup.
(2) Mobile originating call:
   For the purposes of the described embodiment, it is assumed that the signaling connection to the MS is established. A connection setup request carrying the destination (called party) information is received by the IWF. Using this destination information, the IWF by itself (or in collaboration with the address server) determines if the call is destined within the mobile network domain or to an outside user. If the call is intended for an outside user, it is directed to a corresponding gateway. Upon acceptance of the call, the bearer connection is established. Upon call release, the bearer connection is cleared and the previously reserved resources are freed. The subscriber information contained in the address server may be updated, e.g. for billing purposes following connection setup and/or release. If ATM with UNI signaling is used for the packet data network, the cellular routing information (e.g. MSISDN number) may be conveyed in the SETUP message sub-address information element (IE). FIG.6 illustrates the sequence of events for an embodiment of a mobile originated call.
(3) Call from Mobile to Mobile:
   This is a combination of (1) and (2). If the call is originated and terminated from terminals associated with the IWF at the same time, the call is handled locally by the IWF.

### 3. Handover

For the purposes of the described embodiment, it assumed that the handover takes place between different BSCs, i.e. it requires some network intervention.

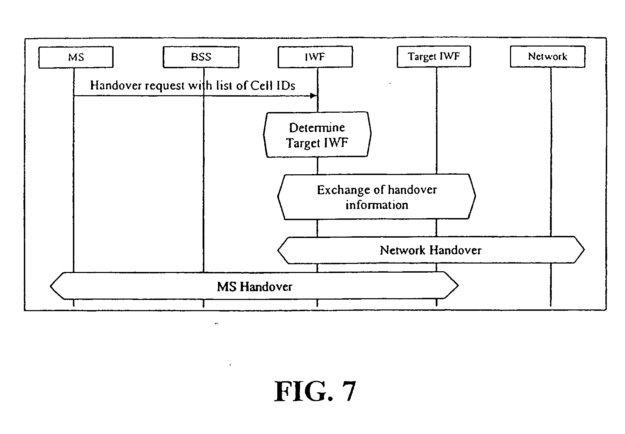

Moreover, handover is requested by the BSS. The handover request contains a possible list of radio cell identifications to which the handover could be targeted to. The IWF determines the target IWF based on the radio cell identifiers supplied in the handover request and other criteria such as traffic load. The IWF, that the MS is still associated with, triggers the necessary procedures on the network side and on the BSS side to facilitate handover. This IWF communicates directly with the target IWF for the handover procedure. All necessary connection and MS data are provided to the target IWF so that the connection can be re-routed. Finally, the address server (AS) is updated with the address of the target IWF. Using the procedures provided by the mobile enhanced packet data network, the rerouting of the connection within the network is performed. Relevant handover information is directly passed between two (neighboring) IWFs via the packet data network. As a result network handover is fast and efficient in terms of overall resources. FIG.7 illustrates the event sequence during handover.

### F. Preferred embodiment with a GSM based BSS and mobile ATM network infrastructure

### 1. Network Description

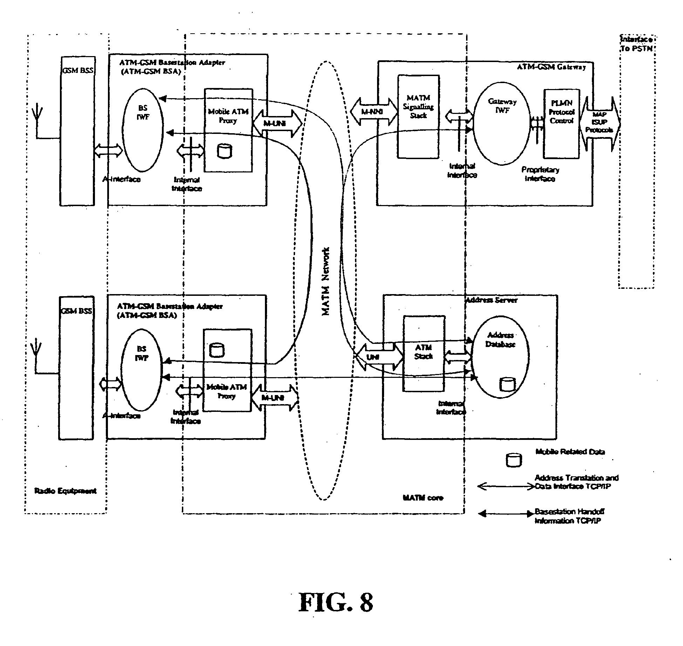

A typical MATM-GSM network comprises multiple mobile ATM-GSM Base. Stations, which are interconnected via the mobile ATM network. The Mobile ATM-Network infrastructure is part of the public network infrastructure and is shared between multiple operators offering mobile and fixed services. Connections are dynamically established thus allowing an efficient use of resources while guaranteeing Quality of Service (QoS) to existing connections. Alternatively, the mobile ATM network can be overlayed to a conventional ATM network, thus creating a virtual private network (VPN). Multiple Gateways can exist for interconnecting the Mobile ATM-Network with other networks like the PSTN or the Internet. An Address Server stores subscriber information as well as the mappings of identifier and addresses. Typically, a service provider would operate the Address Server, thus enabling multiple service providers offering services using the infrastructure of a single network operator. The functional architecture and the relevant interfaces of a mobile ATM network interconnecting two GSM-Basestation Subsystems (BSS) and a gateway to the PSTN network are shown in FIG.8.

The Basestations, the Gateway, and the Address Server are attached to the Mobile ATM Network via the standardized M-UNI, M-NNI, and UNI, respectively. The (M-) ATM-signaling is terminated in these standardized functional entities.

Internal interfaces are specified between the signaling stacks and the respective interworking functions (BS IWF, Gateway IWF) and the Address Server. The standardized GSM A-Interface acts as a logical Interface between GSM Basestation Subsystem (GSM 855) and Base Station Adapter (BSA). The Basestation adapter is the physical entity that hosts the Interworking function, the protocol stacks and the necessary hardware and driver. While call setup and routing procedures rely solely on ATM-signaling, the communication between ATM-GSM-BSAs as well as between the ATM-GSM-BSAs/ATM-GSM-Gateway and the Address Server are based on TCP/IP connections over ATM (Classical IP, LAN Emulation).

The description of the ATM-GSM BSA, and the Address Server is provided in the following sections. For simplicity of the description it is assumed that the preferred embodiment comprises a single Address Server and two ATM-GSM Basestations Subsystems, which are connected via two ATM-GSM BSAs to a mobile ATM network. Further, a single Address Server provides the address translation and identifier mapping.

### 2. ATM-GSM BSA Description

The ATM-GSM BSA converts the user plane protocols and control plane protocols (that are standardized for GSM) into mobile ATM, and vice versa. In the user-plane, GSM defines a TDMA scheme that multiplexes 64 kbps voice channels into a 2 Mbit/s E1-frame. For the conversion into ATM, multiple voice samples belonging to the same connection are buffered and conveyed within one ATM-cell. The VCI identifies a connection. In the opposite direction, i.e. the conversion from ATM to TDMA (E1), the contents of an ATM cell is transmitted in a given slot of multiple subsequent E1-frames. Due to the timing requirements of E1, the ATM Adaptation Layer 1 (AAL1) is used to transport voice connections.

For the control plane, SS7-signaling is converted into Mobile ATM-signaling, and vice versa. In addition, the BSA executes some MSC functions to control the BSS. The ATM-GSM BSA terminates the standardized SS7 GSM signaling (MTP-2, MTP-3, SCCP) that is used to control the operation of the BSS as well as the connection control for associated GSM mobile terminals. On the ATM-side, the ATMGSM BSA contains a proxy signaling entity that forms the signaling endpoint for the MATM-UNI-signaling. A single signaling instance is created upon power on of the BSA. The BSA has a single ATM-address that is registered with the network. This ATM-address acts as the routing address to the mobiles that are currently registered with this BSA. A new terminal instance (proxy signaling instance) is created for each associated GSM-terminal. The ATM-Subaddress information element that is part of the ATM Connection Setup message references a particular terminal instance. The Subaddress information element is carried transparently end-to-end through the ATM (UNI, NNI) signaling path.

The BSA communicates with the neighboring BSAs over TCP/IP connections. These TCP/IP connections are used for handoffs between Basestations. The BSA maintains a TCP/IP connection to the Address Server. The Address Server is queried for location update and connection control.

The BS IWF triggers the handoff procedure between Basestations and in the MATM network. Forward handoff mechanism is supported within the MATM network, i.e. following radio handover a new network connection is established.

Each ATM-GSM subscriber (terminal) is assigned a Location Server within the MATM network. The Location Server maintains the ATM location information data of the registered terminal. The information is used for call routing within the MATM network. The Location Server is updated upon Location Update. The terminals own ATM address (Home ATM address) has the same network prefix as the Location Server. The GSM specific data for GSM subscribers roaming in ATM network is fetched from the subscriber's home PLMN through the Gateway.

The BS IWF maintain the mobile related data such as the LAI, the IMSI and the MSISDN of each mobile that is currently registered in the BSA. This is used to page mobiles for call setup procedure as defined in GSM. For more details on the setup procedure, see European Telecommunications Standards Institute (ETSI): Mobile Radio Interface Layer 3 Specification GSM 04.08 Phase 2. April 1997.

### 3. Address Server Description

The Address Server maintains a database for the IMSI, MSISDN, Home ATM Address, and Location Server Address of all GSM subscribers. A temporary entry in the database is created for roaming GSM subscribers. The Address Server communicates via TCP/IP connections with its clients. Clients are the ATM-GSM BSAs and the Gateways. The lower layer of the TCP/IP transport is not specified hence ATM (CLIP, LANE) or any other layer 2 protocol can be utilized (Ethernet, X25).

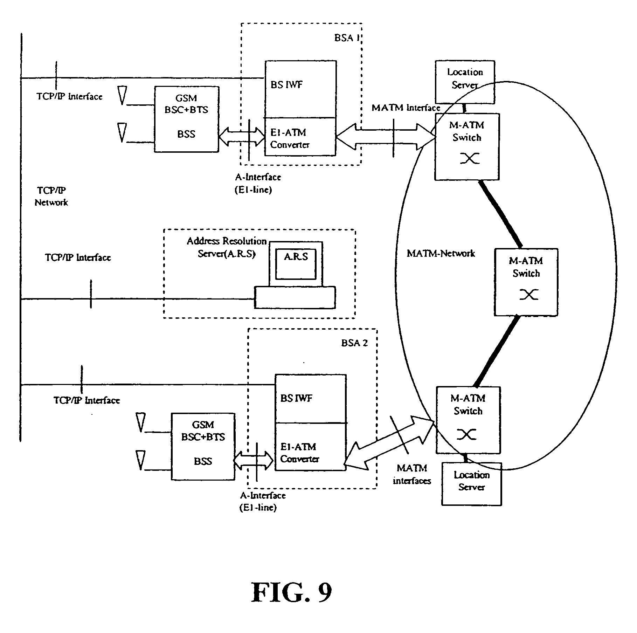

A preferred embodiment of the reference model is depicted FIG.9.

### 4. GSM Basestation Subsystem

The GSM BSS is standard compliant GSM equipment comprising Base Station Controller (BSC) and Base Station Transceiver (BTS). The GSM-equipment provides the standardized A-interface to the BSA. The A-interface is defined in European Telecommunications Standards Institute (ETSI) GSM 08.xx series (BS to MSC) specifications. The GSM BSS contains the TRAU (trunk rate adaptation) functions for providing 64 Kbps voice channels on the A-interface.

### 5. E1-ATM Conversion Unit

The E1-ATM Conversion unit terminates the E1 trunk and converts E1-slots (voice channels) into AAL1-ATM cells and vice versa. In addition, the conversion unit does the translation of VCIs (switching) for switched MATM connections (SVCs), multiplexing of signaling channels and voice channels into one physical line (fiber). In addition, the SS7 stack (MTP2, MTP3, SCCP) for communication with the BSS and Mobile GSM Terminals is executed. The SS7 signaling is filtered out from the E1 trunk (e.g. Slot 15) and passed on to the MTP-2 protocol layer.

### 6. Basestation Interworking Function

The software modules for controlling the Basestation Subsystems, Call Control, Resource Management, and ATM-signaling are executed in the Interworking function (BS IWF). In addition, the BS IWF controls the ATM switching fabric. The IWF can be implemented in an off-the-shelf PC equipped with an ATM NIC. Through the NIC, the BS IWF interfaces with the ATM switching fabric for signaling and control. The interconnections to neighboring BSA as well as the connection to the Address Server are realized via TCP/IP, which is independent of the lower layer implementation. Typically, one would run TCP/IP via the existing ATM network using LAN emulation (LANE) or Classical IP (CLIP).

### 7. Address Server

The Address Server contains the Database for GSM/ATM address translations. It is reachable by the BS-IWFs through a well-known IP Address and TCP Port Number.

### G. ATM-GSM Basestation Adapter Design

### 1. Component Overview

The BSA comprises three major components. The three components are:
- Hardware and drivers,
- Protocol stack,
- BS IWF software.

### 2. Protocol Stack

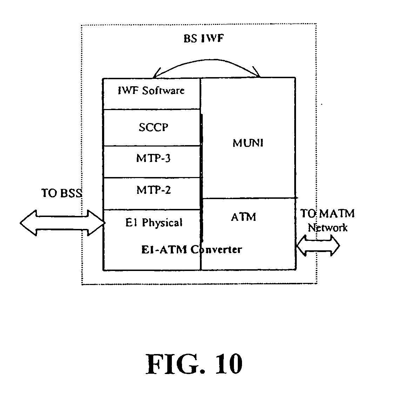

The SS7 stack (MTP-2, MTP-3, SCCP) required for BSS signaling is accessible through an API function set. The SS7 distribution function extends the SCCP API that is provided by the SS7 stack to the BS IWF. FIG.10 illustrates the protocol stacks.

The M-UNI stack that emulates the Mobile ATM terminals is available to the IWF software through a newly defined API, which performs call control and location management functions.

### 3. IWF Software

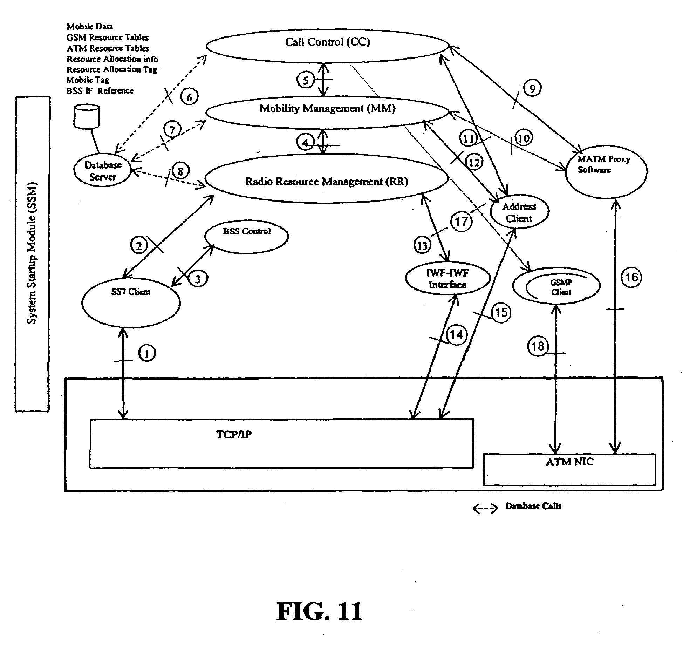

As shown in FIG 11, the IWF Software component is further broken up into the following modules:
- System Startup Module
- SS7 protocol stack comprises MTP-2, MTP-3, and SCCP.
- BSS Control
- Database Server
- Radio Resource Management
- Mobility Management
- Call Control
- Address Client
- IWF-IWF Interface
- GSMP Client
- MATM―Proxy

Each of these modules constitutes a functional entity and implements a specific functionality. The modules together constitute a single task, except the database server, which is implemented as a separate task. These modules communicate with each through well-defined interfaces. A detailed description of these modules is provided in the next section.

### H. Detailed Description of IWF Software Modules

The following sections give detailed description of all the modules of the BS IWF Software Architecture shown in Fig 11.

### 1. System Startup Module (SSM)

1. This entity takes care of starting the system and configuring the IWF. It starts the other modules like CC, MM, RR, and BSS Control modules.
2. It provides the following interfaces:
   - System startup module provides external interfaces for programming the various parameters in the IWF.

### 2. SS7 Protocol stack

SS7 Protocol stack provides the following functionality:
1. Establishing, maintaining and tearing down SCCP connections with the BSS on request from the Radio Resource module.
2. It passes all the mobile related messages received from the BSS to the Radio Resource module along with the connection identifier identifying the connection on which they were received.

### 3. BSS Control

BSS control module provides the following functionality:
1. BSS Control is responsible for carrying out the layer 3 procedures used on the BSS to MSC interface for control of GSM services.
2. On startup, it restarts the BSS by initiating the reset procedure.
3. It initializes all the circuits identified by their Circuit Identity Codes (ClCs), to the idle state after start up.
4. When it receives a RESET from the BSS, it clears all the calls associated with this BSS and marks all the circuits to that BSS as idle.
5. The BSS control handles Circuits Blocking/Unblocking procedures initiated by the BSS.
6. It communicates with the BSS using SCCP connectionless service through the SS7 stack.
7. BSS Control provides the following interfaces:
   - It interfaces with the Database Server for updating circuit related information in the Database.
   - It interfaces with the SS7 stack to transfer the BSSMAP messages that are related to BSS interface management.
   - It interfaces with the Radio Resource Management Layer for informing the status of the BSS-MSC interface.
8. The messages sent and received by the BSS Control relate to the whole interface and not a particular mobile.

### 4. Database Server

The database server provides the following functionality:
1. The Database Server provides access to a database in the IWF.
2. It maintains the system configuration data used by SSM during system startup.
3. The Database server maintains the cell-id to IWF address mappings, which is used for handoffs.
4. The E1 and ATM interface parameters are also maintained in the database.
5. The Database maintains temporary location information of the mobiles. Information pertaining to ongoing calls is also stored in the database.
6. The Database Server implements resource search and allocation functions.
7. It provides interfaces for
   - table creation
   - reading/writing data in the table
   - update of entries in the table and
   - table deletion.

### 5. Radio Resource Management

The Radio Resource Management module provides the following functionality:
1. This module implements the mobility related features like Identification, Authentication, and Location update, i.e. the network side of the GSM RIL3 RR protocol. The GSM RIL3 protocol is specified in European Telecommunication Standards Institute (ETSI): Mobile Radio Interface Layer 3 Specification GSM 04.08 Phase 2. April 1997.
2. Radio Resource Management provides the following interfaces:
   - It provides an interface to the Mobility Management module for RR connection establishment, teardown and maintenance.
   - It accepts DTAP messages from the MM module and relays them to the BSS through its interface with the SS7 stack.
   - RR interfaces with the SS7 stack for initiating SCCP connection establishment and tear down. The A-Interface messages are relayed through this interface to the BSS.
   - It uses the IWF-IWF interface for performing handover procedures.
   - RR interfaces with the Database Server for updating connection information in the database. This information is required for performing handovers.
3. RR routes BSSMAP management messages received from the SS7 stack to the BSS Control module. It also accepts triggers indicating abnormal conditions at the A-Interface, from the BSS Control and informs the MM and CC modules to take suitable actions.
4. For a subscriber registering at the IWF, RR obtains a Mobile Tag from the Database Server. This tag is used to index the subscriber information stored in the IWF. The Mobile Tag is used in intermodule communication for associating a message or request with a particular mobile.
5. RR creates a Mobile Data Block for a mobile registering at the BS IWF. This is subsequently updated with the location information by MM.
6. On the originating IWF, RR initiates the handoff procedure after receiving Handoff required message from the BSC. It then coordinates with RR at the neighboring IWF to handoff the call.
7. On the terminating IWF, RR queries the BSS for resources for accommodating a handoff call from another IWF. If the resources are present, RR then performs the MATM handoff procedure towards the MATM Proxy.

### 6. Mobility Management

Mobility Management module provides the following functionality:
1. This module implements the network side GSM RIL3 MM protocol.
2. In the IWF, the MM interfaces with
   - Call Control for call related messages and resource reservation for a call.
   - RR for receiving and transmitting MM and CC messages, and for initiating RR connection establishment and termination procedures.
   - Address Client for obtaining address translations from the Address Server.
   - Database server for IWF resources and mobile related data.
   - MATM Proxy for invoking MUNI API's.
3. MM is responsible for initiating location update procedures towards the MATM network, on behalf of the mobiles registered at the BS IWF. Initial mobile registration with the network is also the responsibility of the MM layer.
4. MM updates the location information of a mobile in the Mobile Data Block at the Database. This information is available at a location update or an IMSI Detach.
5. Outdated location information is invalidated periodically in the database.
6. Call Control messages, which are received from the Radio Resource Management module, are forwarded to the CC layer by MM. It also conveys DTAP messages received from CC back to RR transparently.

### 7. Call Control

The Call Control module provides the following functionality:
1. Call Control implements the GSM CM layer and performs call interworking between GSM and MATM.
2. It maintains the Call State and GSM RILS CC Timers.
3. It allocates and maintains Transaction Identifiers (TIDs) used in GSM RIL3 CC messages.
4. CC provides the following interfaces:
   - CC interfaces with MM for call related DTAP messages towards the mobile. For all messaging with MM, CC uses a Mobile Tag that associates the message with a particular mobile.
   - CC interfaces with the Database Server for creation of a Call Control Block (CCB). The CCB is used to store call related information during a call. This information is used by RR module for handoff.
   - For call control messages towards the network, CC invokes the appropriate MUNI API's.
   - For mobile originated calls, CC gets the called MSISDN translated from the Address Server through the Address Client.
   - CC controls the ATM Switch through GSMP and is responsible for creating/releasing the voice bearer connection during call establishment/release.
5. It also coordinates with the RR for handoff procedure.

### 8. Address Client

The Address Client implements the following functionality:
1. Address Client implements the address mapping service in the BS IWF by obtaining translations between the IMSI, MSISDN and HA from the Address Server. It also provides the ATM address of the serving Location server within the MATM network.
2. During IWF start up, it establishes a TCP connection with the Address Server that is maintained for sending requests and receiving responses.
3. It accepts requests from IWF components and forwards them to the Address Server. The Address Server responses containing the requested information are then sent back to the requesting module.
4. It interfaces with the following components:
   - Call Control for providing translations of MSISDN number to HA.
   - Mobility Management for providing translations of IMSI to HA
   - Address Server for the required translations.

### 9. IWF-IWF Interface

The IWF-IWF Interface provides the following functionality.
1. This module is responsible for initiating TCP connection establishment with neighboring BS IWFs and maintaining them. These connections are used for handover of calls to other IWFs. The server and the client side are determined by the lexicographic ordering of the IP addresses. The IWF with IP address higher in lexicographic order becomes the server and the IWF with the IP address lower in lexicographic order becomes the client. For example, if IWF1 with IP address 139.85.243.15 and IWF2 with IP address 139.85.243.17 try to connect to each other, then IWF1 becomes the client and IWF2 becomes the server.
2. It interfaces with the following components:
   - Radio Resource Management Layer for the handoff related transactions.

### 10. GSMP Client

This module realizes simple the switching functions like adding / deleting a connection.

### 11.MATM Proxy Server

The MATM proxy signaling for the MATM network supports per-connection Handoffs, Location Updates and Multiple Home Address Registrations.

### 12. Location Update: Non-Roaming Scenario without registration

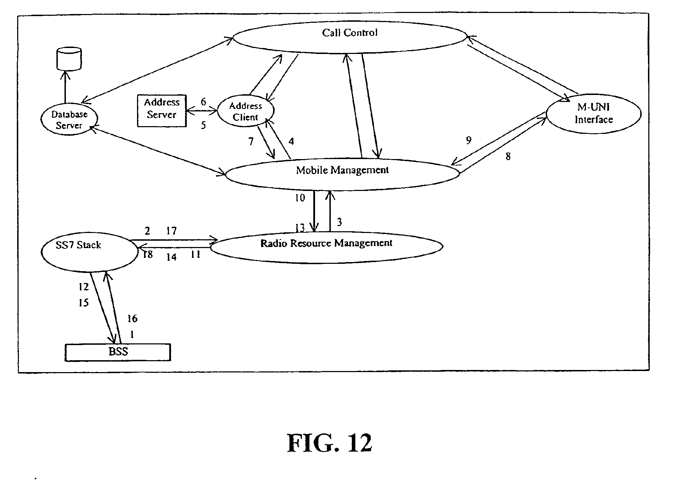

FIG.12 illustrates the Location Update procedure at the IWF when a MS has been registered with the BS IWF a priori. Reference numerals adjacent to arrows denote the following steps 1-18, respectively.
1 SS7 stack receives SCCP N-CONNECT (COMPLETE LAYER3 MESSAGE) Indication from the BSS.
2 Received CO Message (COMPLETE LAYER3 MESSAGE (LOCATION UPDATE REQUEST)) with SCCP Connection ID is sent to RR.
3 LOCATION UPDATE REQUEST is sent to MM.
4 MM sends TRANSLATE IMSI REQUEST to Address Client.
5Address Client sends request for IMSI translation to Address Server via TCP/IP.
6 Address Client receives response for IMSI translation from Address Server via TCP/IP.
7 Address Client sends TRANSLATE IMSI REPONSE to MM.
8 MM Sends ATM LOCATION UPDATE REQUEST to M-UNI.
9 M-UNI responds with ATM LOCATION UPDATE RESPONSE to MM.
10 MM sends LOCATION UPDATE RESPONSE message.
11 RR sends CO message to SS7 stack
12 SS7 stack sends N-DATA to BSS.
13 MM sends RR RELEASE REQUEST to RR.
14 RR sends CO message (CLEAR COMMAND) with SCCP Connection ID.
15 SS7 stack sends N-DATA (CLEAR COMMAND) request to BSS.
16 BSS sends N-DATA (CLEAR COMPLETE) indication to SS7 stack.
17 Receive CO Message (CLEAR COMPLETE) with SCCP Connection ID.
18 Release SCCP Connection with SCCP Connection ID.

### 13. Location Update: Non-Roaming Scenario with Registration

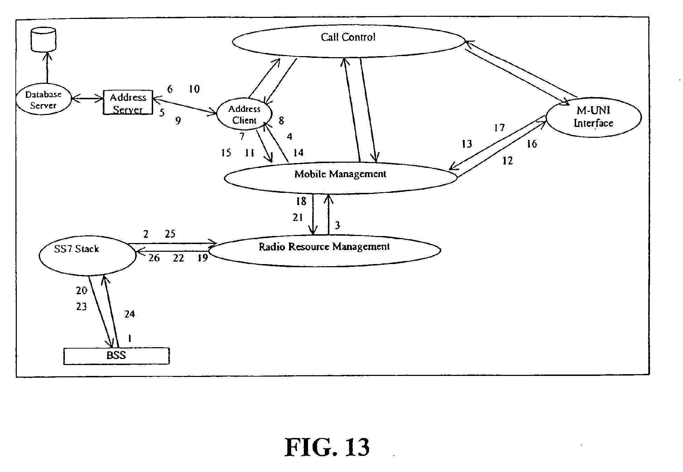

FIG.13 shows the Location Update procedure at the BS IWF when a mobile is entering in the Location area served by the BS-IWF for the first time. Registration is required. Reference numerals adjacent to arrows denote the following steps 1-26, respectively.
1 SS7 stack receives SCCP N-CONNECT (COMPLETE LAYER3 MESSAGE) Indication from BSS.
2 Received CO Message (COMPLETE LAYER3 MESSAGE (LOCATION UPDATE REQUEST)) with SCCP Connection ID is sent to RR.
3 LOCATION UPDATE REQUEST is sent to MM.
4 MM sends TRANSLATE IMSI REQUSET to Address Client.
5 Address Client sends request for IMSI translation to Address Server via TCP/IP.
6 Address Client receives response for IMSI translation from Address Server via TCP/IP.
7 Address Client sends TRANSLATE IMSI FAILURE with cause NEW MOBILE to MM.
8 MM sends NEW MOBILE REQUEST with IMSI and NP to Address Client.
9 Address Client sends request for IMSI translation to Address Server via TCP/IP.
10 Address Client receives response for NEW MOBILE REQUEST from Address Server via TCP/IP.
11 Address Client sends NEW MOBILE RESPONSE with new HA to MM.
12 MM sends GET LOCMSERVER ADDRESS REQUEST to M-U NI.
13 M-UNI responds with GET LOCMSERVER ADDRESS RESPONSE with LocMServer Address and HA to MM.
14 MM sends UPDATE LOCMSERVER ADDRESS to Address Client.
15 Address Client forwards the request to Address Server over TCP/IP.
16 MM Sends ATM LOCATION UPDATE REQUEST to M-UNI.
17 M-UNI responds with ATM LOCATION UPDATE RESPONSE to MM.
18 MM sends LOCATION UPDATE RESPONSE message to RR.
19 RR sends CO message to SS7 stack.
20 SS7 stack sends N-DATA to BSS.
21 MM sends RR RELEASE REQUEST to RR.
22 RR sends CO message (CLEAR COMMAND) with SCCP Connection ID.
23 SS7 stack sends N-DATA (CLEAR COMMAND) request to BSS.
24 BSS sends N-DATA (CLEAR COMPLETE) indication to SS7 stack.
25 Receive CO Message (CLEAR COMPLETE) with SCCP Connection ID.
26 Release SCCP Connection with SCCP Connection ID.

### 14. Call Setup: Mobile Originated

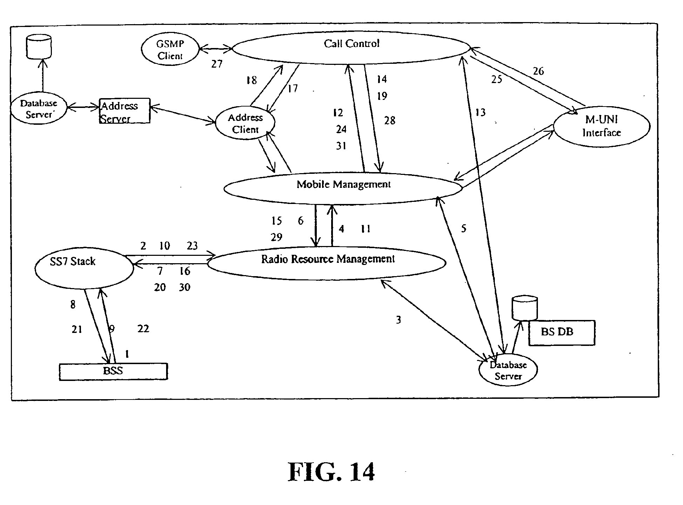

FIG.14 shows the call establishment procedure for a mobile originated call. Reference numerals adjacent to arrows denote the following steps 1-31, respectively.
1 SS7 stack receives SCCP N-CONNECT (COMPLETE LAYER3 MESSAGE) Indication.
2 Receive CO Message (COMPLETE LAYER3 MESSAGE (CM SERVICE REQUEST)) with SCCP Connection ID is sent to RR from SS7 stack.
3 RR Checks the local database and retrieves MOBILE TAG.
4 RR sends RR EST IND to MM with the CM SERVICE REQ as the message.
5 MM verifies the validity of the mobile and its location info.
6 MM sends RR DATA REQ with CM SERVICE ACCEPT.
7 RR send CO Message (CM SERVICE ACCEPT) with SCCP Connection ID to SS7 stack.
8 SS7 stack sends SCCP N-DATA (CM SERVICE ACCEPT) Request to BSS.
9 BSS sends SCCP N-DATA (SETUP message) Indication to SS7 stack.
10 Receive CO Message (SETUP) received by RR with SCCP Connection ID from SS7 stack.
11 RR forwards the message to MM.
12 RIL3 CC Message (SETUP) forwarded to CC via MM with MOBILE TAG.
13 CC creates call control block (CCB).
14 CC Sends CALL PROCEEDING to the mobile to MM
15 MM Sends RR DATA REQ to RR.
16 RR Forwards the DATA to SCCP with SCCP Connection ID.
17 CC sends TR_MSISDN to Address Client.
18 Address Client sends TR_MSISDN_RESP.
19 Assign Channel with Mobile Tag and send MMCC SYNC REQ with the Assignment.
20 Send CO Message ASSIGNMENT REQUEST with SCCP Connection ID. RR starts BSSMAP Timer T10.
21. SS7 stack sends SCCP N-DATA (ASSIGNMENT REQUEST) Request to BSS.
22 BSS sends SCCP N-DATA (ASSIGNMENT COMPLETE) Indication to SS7 stack.
23 RR receives CO Message ASSIGNMENT COMPLETE with SCCP Connection ID. Timer T1O is stopped.
24 MM sends Assign Confirm to CC.
25 CC sends OPEN SVC CONNECTION REQ to the MATM side.
26 MATM sends OPEN SVC CONNECTION CNF to CC.
27 CC programs the GSMP connection via the GSMP client.
28 CC sends MMCC DATA REQ with CONNECT message to mobile.
29 MM forwards the data request to RR.
30 RR sends SCCP_DATA with SCCP Connection ID.
31 Mobile responds with CONNECT ACK.

### 15. Call Setup: Mobile Terminated

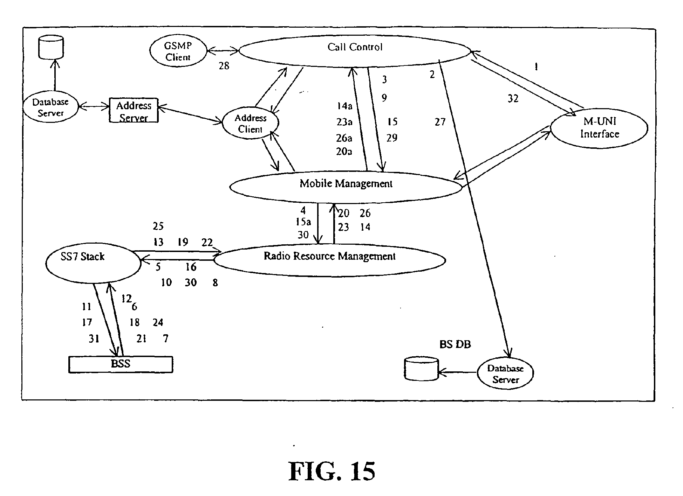

FIG.15 shows the call setup procedure for a mobile terminated call. Reference numerals adjacent to arrows denote the following steps 1-32, respectively.
1 Indication to establish SVC is received at CC with called MSISDN number in ATM subaddress field.
2 CC assigns a GSM TID to the transaction stores value in database and reserves E1 and ATM resources.
3 Connection Setup request sent to MM.
4 RR EST REQ sent to RR by MM.
5 RR sends CL Message (PAGING) to SS7 stack.
6 SS7 stack sends SCCP N-UNITDATA (PAGING) Request.
7 SS7 stack receives SCCP N-CONNECT (COMPLETE LAYER3 MESSAGE) Indication.
8 RR receives CO Message (COMPLETE LAYER3 MESSAGE (PAGING RESPONSE)) message with SCCP Connection ID.
9 CC sends SETUP Message with MOBILE TAG. CC start RIL3 CC Timer T303.
10 RR Send CO Message (SETUP) with SCCP Connection ID.
11 SS7 stack sends SCCP N-DATA (SETUP) Request to BSS.
12 SS7 stack receives SCCP N-DATA (CALL CONFIRM) Indication from BSS.
13 RR receives CO Message (CALL CONFIRM) with SCCP Connection ID.
14,14a RR, MM forwards CALL CONFIRM with MOBILE TAG to CC. Timer T303 is stopped.
15,15a CC assigns Channel with MOBILE TAG.
16 RR sends CO Message (ASSIGNMENT REQUEST) with SCCP Connection ID. RR starts BSSMAP Timer T10
17 SS7 stack sends SCCP N-DATA (ASSIGNMENT REQUEST) Request to BSS.
18 BSS sends SCCP N-DATA (ASSIGNMENT COMPLETE) Indication to SS7 stack.
19 RR receives CO Message (ASSIGNMENT COMPLETE) with SCCP Connection ID.
20, 20a RR sends Assign Confirm with Mobile Tag to CC via MM.
21 SS7 stack receives SCCP N-DATA (ALERTING) Indication from BSS.
22 RR receives CO Message (ALERTING) with SCCP Connection ID from SS7 stack.
23, 23a RR, MM forwards Alerting message with MOBILE TAG to CC.
24 SS7 stack receives SCCP N-DATA (CONNECT) Indication.
25 RR receives CO Message (CONNECT) with SCCP Connection ID.
26, 26a RR, MM forwards CONNECT with MOBILE TAG to CC.
27 CC creates call control block.
28 CC Programs the Connection via the GSMP Client.
29 CC sends CONNECT ACK with MOBILE TAG in MMCC_DATA REQ to MM.
30 RR, MM forwards CONNECT ACK with SCCP Connection ID to SS7 stack.
31 SS7 stack sends SCCP N-DATA (CONNECT ACK) Request to BSS.
32 CC sends connection response to MUNI Interface.

### 16. Handoff: Old BS IWF

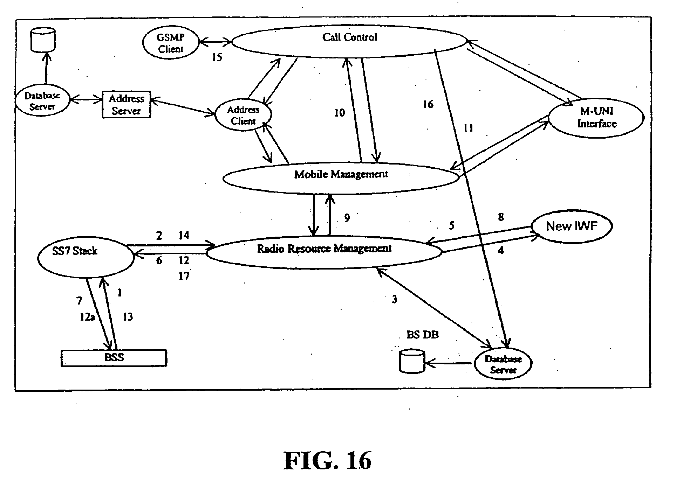

FIG.16 shows the handoff procedure at the old BS IWF, which is originally controlling the call. Reference numerals adjacent to arrows denote the following steps 1-17, respectively.
1 BSS sends SCCP N-DATA (HANDOVER REQUIRED) Indication to SS7 stack.
2 RR receives HO Message (HANDOVER REQUIRED) with SCCP Connection ID. This message contains a list of cell ids where the call can be handed off.
3 RR Translates Cell id to IWF address by lookup in the database. RR selects a cell id from the list and translates it to the address of the corresponding IWF handling it.
4 RR sends a handover request message to the handoff destination IWF.
5 Handover response message is sent to RR. A failure message or timeout at this stage would have resulted in RR selecting another cell id from the cell id list and starting from step 2.
6 RR sends CO Message (HANDOVER COMMAND) with SCCP Connection ID. RR starts GSM Timer T103.
7 SS7 stack sends SCCP N-DATA (HANDOVER COMMAND) Request.
8 RR receives Handover completion message after handover completion on the new IWF side.
9 RR sends Handover Indication message to MM.
10 MM forwards Handover indication to CC.
11 Call Control Block is cleared in the DB by CC.
12, 12a RR sends CLEAR COMMAND to SS7 stack, which sends N-DATA (CLEAR COMMAND) Request.
13 SS7 stack receives N-DATA (CLEAR COMPLETE) Indication.
14 RR receives CO Message (CLEAR COMPLETE) with SCCP Connection ID.
15 CC Clears Connection via the GSMP Client.
16 CC Updates Resource Table.
17 Release SCCP Connection with SCCP Connection ID.

### 17. Handoff: New BS IWF

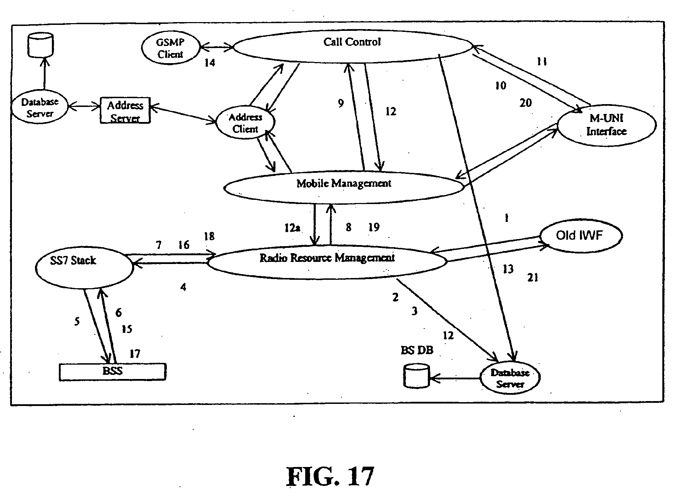

FIG.17 shows the handoff procedure at the new BS IWF. Reference numerals adjacent to arrows denote the following steps 1-21, respectively.
1 Receive Data with Handover request to BSS from Old IWF received on TCP connection with the IWF.
2 RR obtains a mobile tag for the transaction.
3 RR Allocates E1 and ATM resources.
4 RR sends CO Message (HANDOVER REQUEST) to SS7 stack. This message does not contain a SCCP Connection ID as no SCCP connection exists. SS7 stack will establish a SCCP connection to send this message and return the Connection ID to RR.
5 SS7 stack sends SCCP N-CONNECT (HANDOVER REQUEST) Request.
6 SS7 stack receives SCCP N-CONNECT (HANDOVER REQUEST ACKNOWLEDGE) Confirm.
7 RR receives CO Message (HANDOVER REQUEST ACKNOWLEDGE) with SCCP Connection ID from SS7 stack.
8 RR sends Prepare Handoff with MOBILE TAG to MM.
9 MM forwards Prepare Handoff message to CC.
10 Forward Handover message is sent to MATM by CC.
11 Forward Handover Confirm message is received from MATM by CC.
12, 12a CC sends Prepare Handover message to MM which forwards it to RR.
13 RR sends a Handover response message to the handoff originating IWF on TCP connection. RR starts RIL3 RR Timer T204.
14 CC Programs Connection via GSMP Client.
15 SS7 stack receives SCCP N-DATA (HANDOVER DETECT) Indication.
16 RR receives CO Message (HANDOVER DETECT) with SCCP Connection ID from SS7 stack.
17 SS7 stack receives SCCP N-DATA (HANDOVER COMPLETE) Indication
18 RR receives CO Message (HANDOVER COMPLETE) with SCCP Connection ID from SS7 stack. RR stops Timer T204.
19 Handoff Performed with MOBILE TAG at RR, which indicates it to CC via MM.
20 CC invokes Handover complete message to MATM side.
21 RR sends Handover complete to the Old IWF.

### 18. Call Release: Mobile Initiated

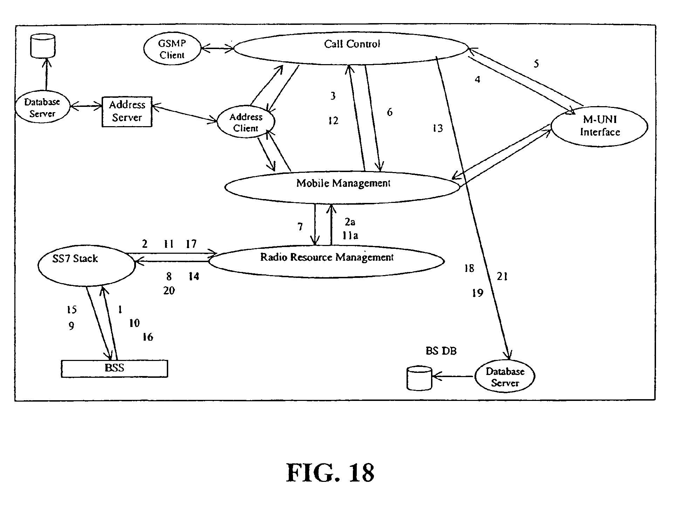

FIG.18 shows a mobile initiated call release procedure at the BS IWF. Reference numerals adjacent to arrows denote the following steps 1-21, respectively.
1 SCCP N-DATA (DISCONNECT) Indication received by SS7 stack.
2,2aRR receives CO Message (DISCONNECT) to RR with SCCP connection Id and forwards it to MM.
3 MM sends RIL3 CC Message (DISCONNECT) to CC with Mobile Tag.
4 CC sends release connection request to MATM.
5 MATM sends confirmation of connection release after call is released in MATM.
6 CC sends RIL3 CC Message (RELEASE) to MM with Mobile Tag, CC starts GSM Timer T-308.
7 MM sends RELEASE message to RR.
8 RR sends CO Message (RELEASE) to SS7 stack with SCCP connection Id.
9 SS7 stack sends SCCP N-DATA (RELEASE) request towards BSS.
10 SS7 stack receives SCCP N-DATA (RELEASE COMPLETE) Indication from BSS.
11, 11a RR receives CO Message (RELEASE COMPLETE) from SS7 stack with Mobile Tag, which forwards it to MM.
12 MM forwards the message to CC, CC stops Timer T-308.
13 CC releases the GSM TID.
14 RR sends CO Message (CLEAR COMMAND) with SCCP Connection ID to SS7 stack.
15 SS7 stack sends N-DATA (CLEAR COMMAND) Request to BSS.
16 N-DATA (CLEAR COMPLETE) Indication is received by SS7 stack from BSS.
17 RR receives CO Message (CLEAR COMPLETE) with SCCP Connection ID.
18 CC clears Connection and frees resources.
19 CC updates resource table.
20 Release SCCP Connection with SCCP Connection ID.
21 Delete CCB.

### 19. Call Release: Network Initiated

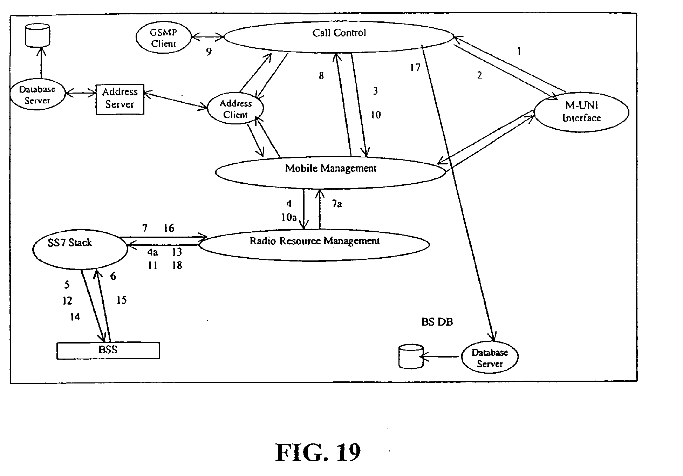

FIG.19 shows the network initiated call release procedure at the BS IWF. Reference numerals adjacent to arrows denote the following steps 1-18, respectively.
1 MATM sends release connection indication to CC.
2 CC sends release connection response to MATM.
3 CC sends RIL3 CC Message (DISCONNECT) to MM with Mobile Tag and starts Timer T-305.
4, 4aMM forwards the message to RR, which forwards it to SCCP with SCCP Connection Id.
5 SS7 stack sends SCCP N-DATA (DISCONECT) Request to BSS.
6 SS7 stack receives SCCP N-DATA (RELEASE) Indication from SS7 SCCP.
7, 7a RR receives CO Message (RELEASE) with SCCP Connection Id and forwards to MM.
8 MM forwards RIL3 CC Message (RELEASE) to CC with Mobile Tag. CC stops Timer T-305.
9 CC sends Delete Connection to GSMP Client.
10, 10a CC sends RIL3 CC Message (RELEASE COMPLETE) to MM, which forwards it to RR with Mobile Tag.
11 RR sends CO Message (RELEASE COMPLETE) with SCCP Connection Id to SS7 stack.
12 SS7 stack sends SCCP N-DATA (RELEASE COMPLETE) Request to SS7 SCCP.
13 RR sends CO Message (CLEAR COMMAND) with SCCP Connection Id to SS7 stack.
14 SS7 stack sends N-DATA (CLEAR COMMAND) Request to BSS.
15 SS7 stack receives N-DATA (CLEAR COMPLETE) Indication from BSS.
16 RR receives CO Message (CLEAR COMPLETE) with SCCP Connection ID.
17 CC Frees GSM resources and Updates Resource Table.
18 RR releases SCCP Connection with SCCP Connection ID by sending RR_SCCP_DISC to SS7 stack.

### I. Address Server Architecture

### 1. Component Overview

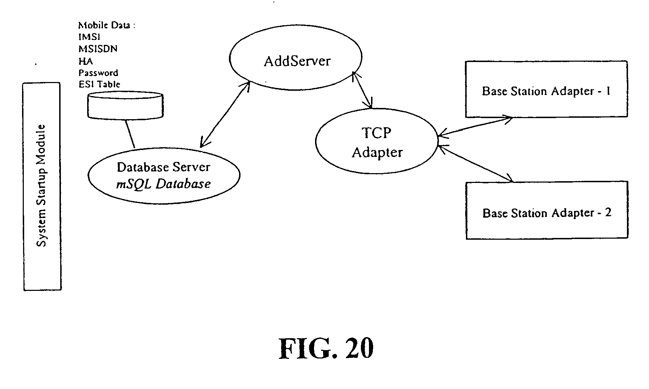

The main components of the Address Server are shown in FIG.20. The modules of the Address Server are described briefly as follows.

### 2. AddServer

The AddServer performs the following functions:
1. The AddServer implements the address translation protocol used by the clients for accessing the services of the AddServer.
2. The AddServer accepts service requests from the client IWFs and provides the requested services by constructing appropriate service sequences for the Database Server. The services provided by the AddServer include:
   - Translation of IMSI to HA and LocMServer Address.
   - Translation of MSISDN to HA.
   - Allocation of new HA based on Network prefix (NP).
   - Updation of LocMServer Address for a given IMSI.
   - Roaming mobile context creation and allocation of an ESI.
3. Roaming mobile context deletion.
4. The AddServer returns causes of the failure of certain operations.

### 3. TCP Adapter

The TCP Adapter provides the following services:
1. The TCP Adapter accepts connection requests from the BS IWFs using TCP/IP sockets, and establishes and maintains these connections.
2. It can initiate termination of these connections as and when required.
3. It forwards the requests originating from the IWFs to the Addserver.
4. It forwards the response of the Addserver to the corresponding IWF.

It monitors two sockets: an INET domain socket and a UNIX domain socket. It communicates to Addserver over the UNIX domain socket. It accepts connect requests from IWF BSAs on the INET domain socket. All the IWF BSAs write their address mapping requests on the INET socket. A request reference number uniquely identifies each request. The TCP adapter then forwards these requests to the Addserver. Upon receiving the response from the AddServer, the TCP adapter forwards it to the respective IWF. The TCP Adapter functions as a concurrent server. It spawns a separate handler for each IWF connecting to it.

### 4. Database Server

The Database Server provides the following services:
1. It provides data retrieval services to the Address Server. Address translation and data conversion are performed using these services. In addition the Address Server accesses network information.
2. It provides data insertion services for creating temporary contexts for roaming mobiles.
3. It provides data deletion services for deleting outdated mobile contexts.

The database contains a SQL Database. The SQL Database system consists of a Database Server Daemon. The clients who wish to access the database connect to the Database Server over TCP/IP Socket and send in their requests in the form of SQL Language Queries. The Database Server processes these queries and writes the result back on the socket. This client-server approach provides the remote access facility for the Database.

## Claims

1. A method for terminating a call in a mobile station in a cellular networking system, said cellular networking system comprising at least one base station subsystem BSS connected to a mobility enhanced data network through an interworking function IWF and an address server, wherein said IWF translates user plane protocols and control plane protocols used on the cellular side BSS into protocols specific to the mobility enhanced data network and said address server contains subscriber data and call routing information to determine the IWF the subscriber is currently associated with, said method **characterized by**:
a) conveying the routing information of the mobile station as part of a call setup message;
b) using the routing information to identify and select the proxy signaling instance associated with the mobile station;
c) invoking necessary actions including service authorization, paging, call setup and bearer connection establishment, said invoking being done by the interworking function; and
d) returning confirmation via the data network to a caller if the call is accepted otherwise sending an error message.

2. The method of claim 1 wherein said interworking function includes functional entities comprising:
base station subsystem control;
call control;
mobility management;
radio resource management;
user plane adaptation; and
proxy signaling.

## Patentansprüche

1. Verfahren zum Beenden eines Anrufs in einer Mobilstation in einem Zellennetzsystem, wobei das Zellennetzsystem wenigstens ein Basisstation-Untersystem (BSS) umfasst, das über eine Zusammenarbeitsfunktion (IWF) und einen Adressenserver mit einem Datennetz mit verbesserter Mobilität verbunden ist, wobei die IWF Anwenderebenen-Protokolle und Steuerebenen-Protokolle, die in der zellenseitigen BSS verwendet werden, in Protokolle übersetzt, die für das Datennetz mit verbesserter Mobilität spezifisch sind, und wobei der Adressenserver Teilnehmerdaten und Anruflenkungsinformationen enthält, um die IWF zu bestimmen, der der Teilnehmer momentan zugeordnet ist, wobei das Verfahren **gekennzeichnet ist durch**:
a) Transportieren der Lenkungsinformationen der Mobilstation als Teil einer Anrufaufbaunachricht;
b) Verwenden der Lenkungsinformationen, um die der Mobilstation zugeordnete Proxy-Signalgebungsinstanz zu identifizieren und auszuwählen;
c) Aufrufen notwendiger Aktionen einschließlich der Dienstberechtigung, des Funkrufs, des Anrufaufbaus und des Trägerverbindungsaufbaus, wobei das Aufrufen **durch** die Zusammenarbeitsfunktion erfolgt; und
d) Zurückleiten einer Bestätigung über das Datennetz zu einem Anrufer, falls der Anruf akzeptiert wird, andernfalls. Senden einer Fehlernachricht.

2. Verfahren nach Anspruch 1, wobei die Zusammenarbeitsfunktion funktionale Entitäten enthält, die umfassen:
Basisstation-Untersystem-Steuerung;
Anrufsteuerung;
Mobilitätsmanagement;
Funkbetriebsmittelmanagement;
Anwenderebenenanpassung; und
Proxy-Signalgebung.

## Revendications

1. Procédé pour terminer un appel dans une station mobile dans un système de mise en réseau cellulaire, ledit système de mise en réseau cellulaire comprenant au moins un sous-système de station de base (BSS) (355) connecté à un réseau de données à mobilité améliorée par l'intermédiaire d'une fonction d'interfonctionnement (IWF) et un serveur d'adresses, dans lequel ladite IWF traduit des protocoles de plan utilisateur et des protocoles de plan de contrôle utilisés sur le BSS côté cellulaire en protocoles spécifiques au réseau de données à mobilité améliorée et ledit serveur d'adresses contient des données d'abonné et des informations de routage d'appels afin de déterminer l'IWF à laquelle l'abonné est actuellement associé, ledit procédé étant **caractérisé par** :
a) l'acheminement des informations de routage de la station mobile comme partie d'un message d'établissement d' appel ;
b) l'utilisation des informations de routage pour identifier et sélectionner l'instance de signalisation mandataire associée à la station mobile ;
c) l'invocation d'actions nécessaires incluant l'autorisation de service, la radiomessagerie, l'établissement d'appel et l'établissement de connexion support, ladite invocation étant effectuée par la fonction d'interfonctionnement ; et
d) le renvoi d'une confirmation via le réseau de données à un appelant si l'appel est accepté, sinon l'envoi d'un message d'erreur.

2. Procédé selon la revendication 1, dans lequel ladite fonction d'interfonctionnement inclut des entités fonctionnelles comprenant :
un contrôle de sous-système de station de base ;
un contrôle d'appel ;
une gestion de la mobilité ;
une gestion des ressources radio ;
une adaptation de plan utilisateur ; et
une signalisation mandataire.
